# EUROPEAN PATENT APPLICATION

(11) **EP 0 726 051 A1**
(43) Date of publication of application: **14.08.1996**
(21) Application number: 96300545.9
(22) Date of filing: 26.01.1996
(51) Int. Cl.: A47J 27/09, A47J 27/08

(54) **Improvements in or relating to pressure cookers**

(30) Priority: 27.01.1995 GB 9501640
(71) Applicant: PRESTIGE GROUP UK PLC, Burnley, Lancashire BB11 2AB (GB)
(72) Inventor: Whitlock, Peter, Kenilworth, Warwickshire (GB); Moore, Stephen, Egham, Surrey (GB)
(74) Representative: Marles, Alan David

(57) **Abstract**

There is provided a lid for a pressure cooker. The lid provided a cover portion (12) and a detachable housing (17) which provides formations (20) for supporting valves (13, 14). The valves are retained by the formations (20) when the housing is removed from the cover portion but are detachable therefrom. One of the valves is a pressure relief valve or safety valve (14) having a sealing portion (30) for covering an aperture (16) in the cover portion (12), a conical wall (31) or support portion and an annular shoulder which is engaged by the support formations (20) of the housing (17).

## Description

This invention relates to pressure cookers.

According to a first aspect of the present invention there is provided a lid for a pressure cooker comprising a cover portion which in use is sealingly attached to the main body of the pressure cooker and at least one housing portion, the or each housing portion being releasably attached to the cover portion and including a pressure relief valve and a pressure regulating valve which valves are retained on the or each housing portion on removal of the or each housing portion from the cover portion.

Preferably one housing portion is provided, the two valves being retained on the housing portion. A further preferred feature is that the valves are releasably secured on the housing portion and are located so as to cooperate with apertures formed in the cover portion.

In preferred arrangements the housing portion incorporates a seal member which defines with the cover portion a single chamber, both valves opening into said chamber. Conveniently the chamber has a single outlet port.

With certain chosen embodiments the housing portion extends generally diametrically across the cover portion and the releasable attachment is by way of a spring loaded latch mechanism.

According to a second aspect of the present invention there is provided a pressure relief valve for a pressure cooker having a base and a cover, said valve having a support portion for engagement by a support member to urge a sealing portion of the valve into sealing engagement with the cover around an aperture in the cover.

Preferably the valve comprises a single rubber/synthetic rubber element. In one arrangement the support portion comprises a conical wall flaring outwardly from the sealing portion, the part of the conical wall remote from the sealing portion being engaged in use by the support member.

In another arrangement said element comprises a chamber which in use surrounds the aperture and which has an opening oppositely disposed to the aperture in use, said chamber incorporating a sealing member which in use blocks said opening due to pressure through the aperture and which pushes through said opening at a predetermined pressure. A further feature is that a conical wall portion flaring outwardly from the chamber away from the aperture is provided, the part of the conical wall remote from the chamber being engaged by the support member. A still further feature is that the chamber wall provides an inward lip extending all around the aperture for engagement with the cover. Also an annular space is provided by the lip between the cover and the lip.

Conveniently the support member is detachable from the cover and also the valve is releasably attached to the support member.

The invention also provides a lid for a pressure cooker, said lid incorporating such a valve and further provides a pressure cooker having a lid incorporating such a valve.

Embodiments of the present invention will now be described in more detail. The description makes reference to the accompanying diagrammatic drawings in which:

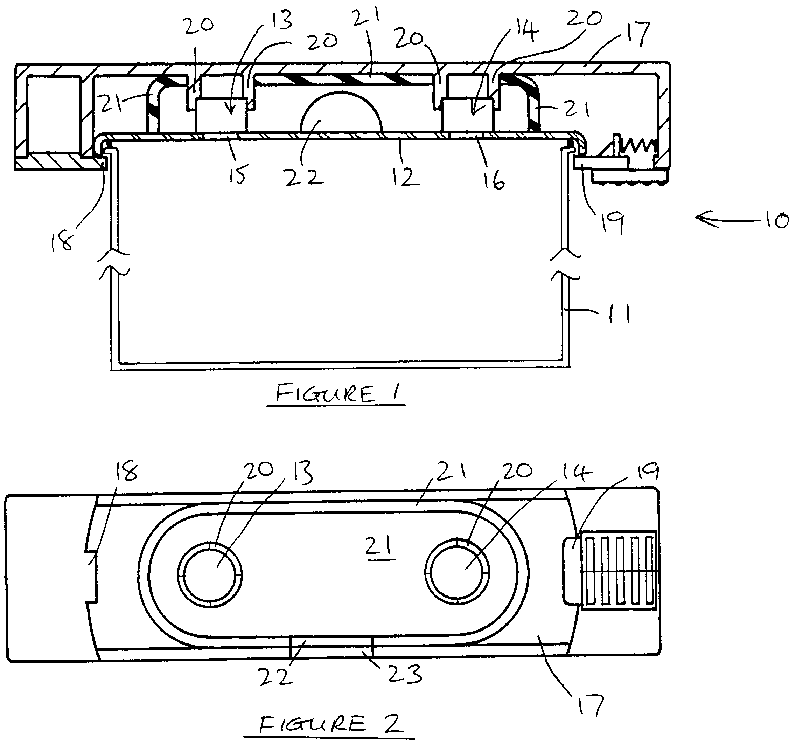

Figure 1 is a cross-section through a pressure cooker incorporating the present invention,
Figure 2 is an underplan view of the housing of the figure 1 arrangement,
Figure 3 is a detailed sectional view through a pressure relief valve according to the present invention,
Figure 4 is a detailed sectional view through another pressure relief valve, and
Figure 5 is a detailed sectional view through a further pressure relief valve.

In the figures there is shown a pressure cooker 10 having a base 11 and a cover 12. In use the base 11 and the cover 12 are securely interconnected in a sealing manner to allow pressure to build up within the cooker. The interconnection means itself is not shown.

By way of introduction a pressure cooker generally incorporates two valves, which valves are acted upon by the internal pressure in the cooker. These valves are a pressure regulating valve shown schematically as 13 and a safety valve shown schematically as 14. The pressure regulating valve 13 is typically set by the user according to the desired pressure within the cooker and the valve 13 communicates with the interior via a hole 15 in the cover. The valve of course forms a seal around the hole 15 and relieves the interior pressure when the set pressure is exceeded. The safety valve 13 is usually constructed to vent the interior when the pressure exceeds a safe value which is higher than the maximum possible set pressure. This high pressure may be the result of faulty operation of the regulating valve or the accidental blockage of the hole 15 by debris such as food from inside the cooker. Again, the safety valve communicates with the inside of the cooker via a hole 16 and the valve 14 also forms a seal around the hole 16 during use.

In the arrangement shown, the cover 12 has an external housing in the form of moulding 17 which is releasably attached to the cover 12 by way of a lip 18 and a spring loaded latch 19. The valves 13, 14 are supported in the moulding 17 by formations 20 and are detachable therefrom. When the moulding 17 is attached to the cover 12, the formations 20 ensure that the valves 13, 14 are securely seated around their respective holes 15, 16.

Also provided in the moulding 17 is a sealing member 21 which seals around the formations 20 and which seals with the cover 12 around its lower edge except for a cut-away portion 22. This portion 22 is aligned with a corresponding cut-away 23 in the moulding 17.

When in use, it will be appreciated that whichever valve vents, the steam etc. from the inside of the cooker will be channelled in the same, known direction, namely through cut-away 23. It has also been found that the venting into the chamber defined between the cover 12 and the sealing member 21 has a silencing effect on the escaping steam. In other words the chamber acts as an expansion chamber to silence the high velocity escaping steam.

The moulding 17 can be removed from the cover 12 and the valves 13 and 14 are retained on the moulding 17. In this way no valve devices remain attached to the cover 12 after removal of the moulding 17 so that the cover 12 can be cleaned thoroughly and may even be cleaned in a dishwasher. The water used can be of such a temperature that it could have damaged the valves if they were retained on the cover as in known arrangements.

Also, by suitable design the valves 13, 14 can be removable from their supporting formations 20 when the moulding 17 is removed from the cover 12. This enables the sealing member 21 and all steam pathways to be readily accessible for cleaning and allows the valves to be replaced if necessary.

It will be appreciated that the shape dimensions and configuration of the moulding, sealing member, valves and cut-aways can be varied as desired. For example, two or more common outlets could be provided, but the single direction outlet is preferred. Also the two valves could vent into separate chambers each having its own outlet. It may also be possible to have a separate moulding associated with each valve although the single diametric moulding is preferred. Also the moulding could incorporate a pressure indicating device adapted to be sealingly engaged around a further hole in the cover. However, such devices do not vent steam from the inside of the cooker and are not, therefore, relevant to the common channelling of vented steam. Furthermore the precise method of securing the moulding 17 discussed above is of course just an example of a suitable arrangement.

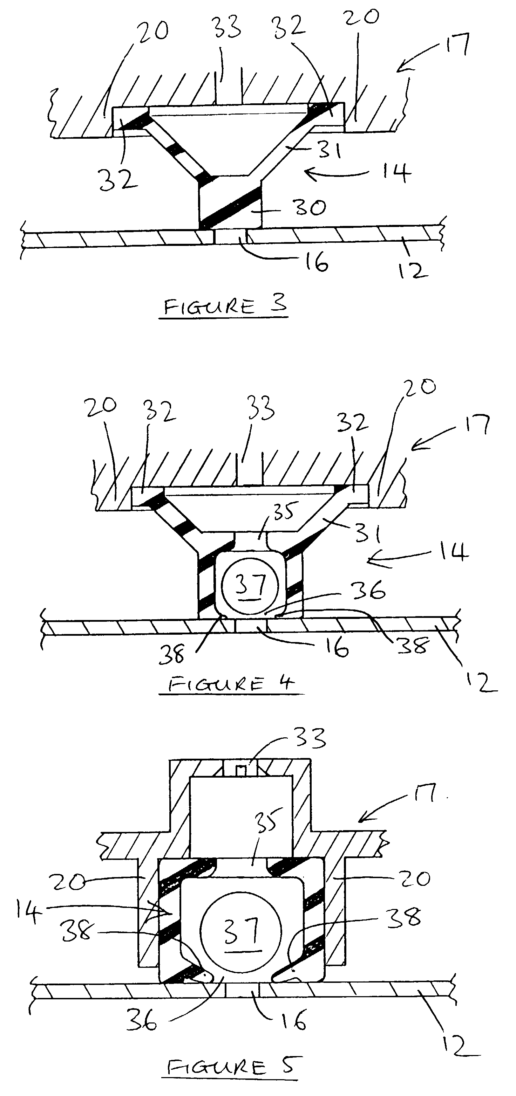

In figures 3 to 5 there are shown some examples of pressure relief valves which can be used with the above described arrangements. In figure 3 there is shown the cover 12 and formations 20 in the moulding 17 for retaining the pressure relief or safety valve 14. The valve 14 has a lower sealing portion 30 which in use sits over the hole 16 on the outside of the cover 12 and forms a seal around the marginal periphery of the hole. Extending upwards from the sealing portion 30 is a conical wall 31 which flares outwardly and terminates in an annular shoulder 32. The shoulder 32 is received and retained by the formations 20 of the moulding. The rigidity of the valve 14 which is made from rubber or synthetic rubber determines the pressure at which deformation and thus venting will occur. The conical wall 31 allows the venting deformation to occur and then resiliently returns to its original, sealing configuration. A venting hole 33 above the wall 31 in the moulding 17 ensures that, on deformation, suction effects do not prevent the valve from returning to its sealing condition.

In figure 4 a similar conical wall 31 is provided for engagement with the moulding 17. However, the lower portion 34 defines a chamber having apertures 35, 36 top and bottom. Inside the chamber is a sealing element 37 which in this case is in the form of a ball bearing. Other forms of sealing element 37 are envisaged. The lower portion provides an annular lip 38 which sealingly surrounds the hole 16 on the outside of the cover 12. In use the internal pressure of the cooker pushes the ball bearing 37 into sealing engagement with the hole 35. The inside of the chamber is, therefore, at increased pressure and this acts downwardly on the lip 38 to improve the seal with the cover. At a predetermined pressure the ball bearing 37 is forced through the aperture 35 thereby venting the valve. To reset the valve it has to be removed from the moulding 17 and the ball bearing 37 pushed back into its chamber.

Figure 5 is similar in many respects to figure 4 except the conical wall has been removed and the lower portion 34 retained on its own, supported by the formations 20 of the moulding 17. The other principal difference in construction is that an annular recess 39 is formed in the underside of the lip 38. When the valve is under pressure with the ball bearing sealing against the aperture 35, a better, more reliable seal is provided by the lip 38. Clearly it would be disadvantageous if the seal around the hole 16 in the figures 4 and 5 constructions were to be weak as the device would keep venting at pressures below that which the valve is designed to vent.

Clearly other embodiments of valve can be readily envisaged with simple changes of shape and geometry.

## Claims

1. A lid for a pressure cooker comprising a cover portion which in use is sealingly attached to the main body of the pressure cooker and at least one housing portion, the or each housing portion being releasably attached to the cover portion and including a pressure relief valve and a pressure regulating valve which valves are located so as to cooperate with apertures formed in the cover portion and are retained on the or each housing portion on removal of the or each housing portion from the cover portion.

2. A lid as claimed in claim 1 wherein one housing portion is provided, the two valves being retained on the housing portion.

3. A lid as claimed in claim 2 wherein the valves are releasably secured on the housing portion.

4. A lid as claimed in claim 2 or claim 3 wherein the housing portion incorporates a seal member which defines with the cover portion a single chamber, both valves opening into said chamber.

5. A lid as claimed in claim 4 wherein the chamber has a single outlet port.

6. A lid as claimed in any one of claims 2 to 5 wherein the housing portion extends generally diametrically across the cover portion.

7. A lid as claimed in any one of claims 1 to 6 wherein the releasable attachment is by way of a spring loaded latch mechanism.

8. A pressure relief valve for a pressure cooker having a base and a cover, said valve having a support portion for engagement by a support member to urge a sealing portion of the valve into sealing engagement with the cover around an aperture in the cover.

9. A valve as claimed in claim 8 wherein the valve comprises a single rubber/synthetic rubber element.

10. A valve as claimed in claim 9 wherein the support portion comprises a conical wall flaring outwardly from the sealing portion, the part of the conical wall remote from the sealing portion being engaged in use by the support member.

11. A valve as claimed in claim 9 wherein said element comprises a chamber which in use surrounds the aperture and which has an opening oppositely disposed to the aperture in use, said chamber incorporating a sealing member which in use blocks said opening due to pressure through the aperture and which pushes through said opening at a predetermined pressure.

12. A valve as claimed in claim 10 wherein a conical wall portion flaring outwardly from the chamber away from the aperture is provided, the part of the conical wall remote from the chamber being engaged by the support member.

13. A valve as claimed in claim 11 wherein the chamber wall provides an inward lip extending all around the aperture for engagement with the cover.

14. A valve as claimed in claim 13 wherein an annular space is provided by the lip between the cover and the lip.

15. A valve as claimed in any one of claims 8 to 14 wherein the support member is detachable from the cover and also the valve is releasably attached to the support member.

16. A lid for a pressure cooker, which lid incorporates a pressure relief valve as claimed in any one of claims 8 to 15.

17. A lid for a pressure cooker as claimed in any one of claims 1 to 7 incorporating the valve in any one of claims 8 to 15.
